# EUROPÄISCHE PATENTSCHRIFT

(11) **EP 2 199 781 B1**
(45) Veröffentlichungstag und Bekanntmachung des Hinweises auf die Patenterteilung: **17.04.2019**
(21) Anmeldenummer: 09015120.0
(22) Anmeldetag: 07.12.2009
(51) Int. Cl.: G01N 21/64

(54) **Verfahren zur räumlich hochauflösenden stochastischen Untersuchung einer mit einer Substanz markierten Struktur einer Probe**
Method for spatial high-resolution stochastic investigation of a sample's structure marked with a substance
Procédé d'examen stochastique haute résolution spatiale d'une structure marquée par une substance d'un échantillon

(30) Priorität: 22.12.2008 DE 102008064164
(43) Veröffentlichungstag der Anmeldung: 23.06.2010
(73) Patentinhaber: Leica Microsystems CMS GmbH, 35578 Wetzlar (DE)
(72) Erfinder: Seyfried, Volker Dr., 69226 Nussloch (DE); Sieber, Jochen Dr., 68163 Mannheim (DE)
(74) Vertreter: Patent- und Rechtsanwälte Ullrich & Naumann

(56) Entgegenhaltungen:
- WO-A1-2007/128434
- WO-A2-2006/127692
- US-A1- 2006 038 993
- US-A1- 2008 032 414
- SULIANA MANLEY ET AL: "High-density mapping of single-molecule trajectories with photoactivated localization microscopy", NATURE METHODS, Bd. 5, Nr. 2, 1. Februar 2008 (2008-02-01) , Seiten 155-157, XP55021362, ISSN: 1548-7091, DOI: 10.1038/nmeth.1176
- PALMER AMY E ET AL: "Measuring calcium signaling using genetically targetable fluorescent indicators", NATURE PROTOCOLS, NATURE PUBLISHING GROUP, GB, vol. 1, no. 3, 1 January 2006 (2006-01-01) , pages 1057-1065, XP001538933, ISSN: 1750-2799, DOI: 10.1038/NPROT.2006.172
- SHIN-NOSUKE UNO ET AL: "A spontaneously blinking fluorophore based on intramolecular spirocyclization for live-cell super-resolution imaging", NATURE CHEMISTRY, no. 6, 20 July 2014 (2014-07-20), pages 681-689, XP055253771, GB ISSN: 1755-4330, DOI: 10.1038/nchem.2002

## Beschreibung

Die Erfindung betrifft ein stochastisches Lokalisationsmikroskopieverfahren zur räumlich hochauflösenden stochastischen Untersuchung einer mit einer Substanz markierten Struktur einer Probe, wobei als Struktur, die mit der Substanz markiert wird, eine biologische Struktur verwendet wird, wobei Moleküle der Substanz in einem ersten Zustand und in einem zweiten Zustand vorliegen können, wobei sich der erste und der zweite Zustand in mindestens einer fotophysikalischen Eigenschaft voneinander unterscheiden.

Verfahren zur räumlich hochauflösenden stochastischen Untersuchung einer mit einer Substanz markierten Struktur einer Probe sind aus der Praxis bekannt. Diesbezüglich wird auf die WO 2006/127692 A2, die US 2008/0032414 A1 und auf die WO 2007/128434 A1 verwiesen, aus denen stochastische Hochauflösungs- bzw. Lokalisationsmikroskopieverfahren bekannt sind, die auch unter den Namen PALM, STORM, PALMIRA bzw. GSDIM bekannt sind. Des Weiteren ist es aus der Zeitschrift Nature Methods, VOL. 5 NO. 2, Februar 2008, Seite 155 bis 157 bekannt, eine fotoaktivierte Lokalisationsmikroskopie (PALM) an lebenden Zellen durchzuführen, wobei eine Bewegung einzelner Partikel oder Moleküle verfolgt werden kann. Dieses Verfahren wird auch als sptPALM (single particle tracking PALM) bezeichnet.

Bei sämtlichen bekannten Verfahren zur räumlich hochauflösenden stochastischen Untersuchung einer mit einer Substanz markierten Struktur einer Probe, wobei als Struktur, die mit der Substanz markiert wird, eine biologische Struktur verwendet wird, können Moleküle der Substanz in einem ersten Zustand und in einem zweiten Zustand vorliegen. Der erste und der zweite Zustand unterscheiden sich dabei in mindestens einer fotophysikalischen Eigenschaft. Diese fotophysikalische Eigenschaft besteht häufig in der Fähigkeit zur Fluoreszenz. Mit anderen Worten können ein erster fluoreszierender Zustand und ein zweiter nicht fluoreszierender Zustand vorliegen.

Bei den bekannten Verfahren wird eine Substanz, mit der eine interessierende Struktur markiert ist, aktiv zwischen zwei Zuständen geschaltet. Bei PALM, PALMIRA oder STORM wird beispielsweise die Substanz von einem nicht fluoreszierenden Zustand in einen fluoreszierenden Zustand geschaltet. Dies erfolgt gewöhnlich durch Licht. Dabei wird darauf geachtet, dass nur so viele Moleküle der Substanz im fluoreszierenden Zustand sind, dass die meisten der über ein Mikroskop mit z.B. einer CCD-Kamera detektierten Signale eindeutig einzelnen Molekülen zuzuordnen sind. Dies bildet die Grundidee dieser stochastischen Verfahren, bei denen eine Vielzahl von Bildern aufgenommen wird. Nach Bestimmung des Schwerpunkts der aufgenommenen Signale wird aus den Schwerpunkten ein hochaufgelöstes Bild durch Überlagerung der Vielzahl von aufgenommenen Bildern konstruiert.

Beim GSDIM-Verfahren wird beispielsweise eine fluoreszierende Substanz in einen dunklen Zustand A "gepumpt", in dem diese nicht fluoresziert und aus dem sie spontan wieder in den fluoreszierenden Ausgangszustand B zurückkehren kann. Durch definiertes Beleuchten kann erreicht werden, dass nur eine bestimmte Menge an Molekülen gleichzeitig fluoresziert und so auch lokalisiert werden kann. Analog zu den anderen Methoden der stochastischen Hochauflösung kann durch Aufnehmen einer Bilderserie von Signalen von Einzelmolekülen und durch das Bestimmen und Aufsummieren der einzelnen Schwerpunkte ein hochauflösendes Bild erzeugt werden.

Alle bisherigen bekannten Verfahren zur räumlich hochauflösenden stochastischen Untersuchung einer mit einer Substanz markierten Struktur einer Probe benötigen ein aktives Schalten zwischen zwei Zuständen, das in der Regel durch Licht erfolgt, beispielsweise durch Beleuchtung mit einem Laser. Dieser erforderliche aktive Schaltvorgang macht die bekannten Verfahren aufwendig.

Der vorliegenden Erfindung liegt daher die Aufgabe zugrunde, ein Verfahren der eingangs genannten Art anzugeben, mit dem eine besonders einfache Untersuchung einer mit einer Substanz markierten Struktur einer Probe ermöglicht ist. Erfindungsgemäß wird die voranstehende Aufgabe durch ein Verfahren mit den Merkmalen des Patentanspruchs 1 gelöst. Danach ist das in Rede stehende Verfahren zur räumlich hochauflösenden stochastischen Untersuchung einer mit einer Substanz markierten Struktur einer Probe derart ausgestaltet und weitergebildet, dass eine Substanz verwendet wird, bei der mit hinreichend hoher Wahrscheinlichkeit und in hinreichend großem Umfang ein Teil der Moleküle in dem ersten Zustand und ein Teil der Moleküle in dem zweiten Zustand vorliegen und ein Wechsel zwischen den beiden Zuständen in beiden Richtungen spontan erfolgen kann. Dabei umfasst das Verfahren die folgenden Schritte: Markieren der Struktur mit der Substanz; Aufnehmen einer Bildserie der Probe; Bestimmen von Schwerpunkten von Einzelmolekülen in den aufgenommenen Bildern; und Konstruieren eines hochaufgelösten Bilds aus der Serie der Schwerpunktsbilder.

In erfindungsgemäßer Weise ist erkannt worden, dass durch geschickte Auswahl der markierenden Substanz die voranstehende Aufgabe auf überraschend einfache Weise gelöst wird. Hierzu wird im Konkreten eine Substanz verwendet, bei der ein spontaner Wechsel zwischen zwei geeigneten Zuständen erfolgt. Eine spezielle Schaltung oder Aktivierung der Substanz von einem Zustand in einen anderen Zustand mittels beispielsweise eines Lasers ist nicht erforderlich. Bei der Verwendung der erfindungsgemäßen Substanz ist von Bedeutung, dass sowohl der erste Zustand als auch der zweite Zustand mit hinreichend hoher Wahrscheinlichkeit vorliegen. Mit anderen Worten liegen ein Teil der Moleküle mit hinreichend hoher Wahrscheinlichkeit und in hinreichend großem Umfang in dem ersten Zustand und ein Teil der Moleküle mit hinreichend hoher Wahrscheinlichkeit und in hinreichend großem Umfang in dem zweiten Zustand intrinsisch vor. Letztendlich liegt hier ein dynamisches Gleichgewicht zwischen den beiden Zuständen vor, wobei ein Wechsel zwischen den Zuständen spontan erfolgen kann.

Dieses spontane Wechseln der Zustände kann in eleganter Weise bei der stochastischen Hochauflösungs- bzw. Lokalisationsmikroskopie verwendet werden, da aufgrund des spontanen Wechsels zwischen den Zuständen immer nur eine bestimmte Anzahl von Molekülen in dem jeweiligen Zustand vorliegt. Keinesfalls sind sämtliche Moleküle gleichzeitig in demselben Zustand. Folglich ist auch hier - wie bei bisher bekannten entsprechenden Verfahren - nur eine bestimmte Menge an Molekülen in einem Zustand mit der gewünschten fotophysikalischen Eigenschaft, beispielsweise in einem fluoreszierenden Zustand.

Das erfindungsgemäße Verfahren könnte als SSLM-Verfahren (spontaneous switching localization microscopy) bezeichnet werden, wobei eine spontan zwischen Zuständen wechselnde Substanz zur Markierung der gewünschten Struktur einer Probe verwendet wird. Bis auf das erfindungsgemäße Verwenden einer wie oben beschriebenen Substanz entspricht das Verfahren üblichen stochastischen Lokalisationsmikroskopieverfahren.

Der erfindungsgemäße und grundlegende Unterschied zu den herkömmlichen Verfahren besteht darin, dass die Substanz nicht von einem Zustand aktiv in einen anderen Zustand überführt werden muss, sondern dass dies intrinsisch zwischen den beiden Zuständen erfolgt und so kein aktives Schalten erforderlich ist.

Folglich ist mit dem erfindungsgemäßen Verfahren zur räumlich hochauflösenden stochastischen Untersuchung einer mit einer Substanz markierten Struktur einer Probe ein Verfahren angegeben, mit dem eine besonders einfache Untersuchung der markierten Struktur der Probe ermöglicht ist.

Ein solches erfindungsgemäßes Verfahren wird hinsichtlich der Abfolge der Verfahrensschritte wie folgt realisiert. Zunächst erfolgt ein Markieren einer Probe mit der Substanz bzw. mit einem die Substanz bindenden Tag. Derartige Verfahren zum Markieren einer Probe mit einem die Substanz bindenden Tag sind aus der Praxis bekannt. In einem nächsten Verfahrensschritt erfolgt ein Aufnehmen einer Bilderserie der Probe. Dabei ist von Bedeutung, dass sich nur eine solche Menge der Substanz in einem Zustand befindet, in dem sie detektierbare Signale abgeben kann, dass die von Einzelmolekülen ausgehenden und mit einer beugungsbegrenzten Auflösung eines Mikroskops detektierten Signale zu einem großen Teil noch eindeutig den emittierenden Einzelmolekülen zugeordnet werden können. In einem nächsten Schritt erfolgt ein Bestimmen von Schwerpunkten von Einzelmolekülen in den Bildern der Serie. Schließlich erfolgt ein Konstruieren eines hochaufgelösten Bildes aus der Serie der Schwerpunktsbilder.

Bei einer vorteilhaften Ausgestaltung des erfindungsgemäßen Verfahrens könnten die Moleküle der Substanz in mindestens einem weiteren Zustand vorliegen, wobei sich sämtliche Zustände in mindestens einer fotophysikalischen Eigenschaft voneinander unterscheiden, und wobei mit hinreichend hoher Wahrscheinlichkeit und in hinreichend großem Umfang ein Teil der Moleküle in dem ersten Zustand, ein Teil der Moleküle in dem zweiten Zustand und ein Teil der Moleküle in dem mindestens einen weiteren Zustand vorliegen und ein Wechsel zwischen sämtlichen Zuständen in allen Richtungen spontan erfolgen kann. Mit anderen Worten ist das erfindungsgemäße Verfahren nicht auf eine Substanz eingeschränkt, bei der lediglich zwei Zustände vorliegen. Vielmehr sind auch drei oder mehrere Zustände denkbar, zwischen denen in etwa gleichem oder in unterschiedlichem Umfang ein spontaner Wechsel stattfindet. Je nach Anwendungsfall kann eine geeignete Substanz mit der geeigneten Anzahl von Zuständen ausgewählt werden.

Im Konkreten könnte es sich bei mindestens einem Zustand um einen nicht fluoreszierenden Zustand und bei mindestens einem anderen Zustand um einen fluoreszierenden Zustand handeln. Jedoch könnte auch eine andere fotophysikalische Eigenschaft genutzt werden, die einen Unterschied zwischen den jeweiligen Zuständen ausmacht.

Es sind Anwendungen des erfindungsgemäßen Verfahrens denkbar, bei denen unterschiedliche durchschnittliche Verweildauern der Moleküle der Substanz in einem der Zustände oder in allen Zuständen von Vorteil sind. Je nach Anwendung könnte die Verweildauer der Moleküle in einem Zustand oder in mehreren Zuständen beispielsweise einige Mikrosekunden betragen. Auch längere oder kürzere Verweildauern könnten je nach Anwendung vorteilhaft sein.

Grundsätzlich könnte die Verweildauer der Moleküle in einem Zustand oder in mehreren Zuständen oder die Wechselgeschwindigkeit zwischen den Zuständen durch die Veränderung mindestens eines äußeren Parameters beeinflussbar sein. Hierdurch ist eine Anpassung des Verfahrens an die jeweils zu untersuchende Probe realisierbar.

In besonders einfacher Weise könnte der mindestens eine äußere Parameter die Temperatur, ein elektrisches Feld oder Licht sein. Je nach Höhe der Temperatur, Größe des Feldes oder Intensität des Lichts könnte die Verweildauer der Moleküle in einem oder in mehreren Zuständen oder die Wechselgeschwindigkeit zwischen den Zuständen veränderbar sein. Hierbei ist auf den jeweiligen Anwendungsfall abzustellen.

In alternativer oder zusätzlicher Weise könnte die Beeinflussung durch die Wechselwirkung mit mindestens einer Komponente in der Probe oder mit mindestens einer Komponente in einer die Struktur enthaltenden Lösung erfolgen. In gewünschter Weise könnten hierbei geeignete Komponenten in die Probe oder in die Lösung hinzugegeben werden, um die gewünschte Beeinflussung zu erreichen. Weiter alternativ oder zusätzlich könnte die Beeinflussung durch die Veränderung des pH-Werts einer die Struktur enthaltenen Lösung erfolgen.

Des Weiteren ist eine Beeinflussung durch eine Veränderung der Konzentration und/oder einer Eigenschaft mindestens einer Komponente in der Probe oder mindestens einer Komponente in einer die Struktur enthaltenden Lösung vorteilhaft. Auch könnte die Beeinflussung durch den Austausch eines Lösungsmittels oder durch die Veränderung einer Eigenschaft des Lösungsmittels in einer die Struktur enthaltenden Lösung erfolgen. Schließlich könnte die Beeinflussung durch eine Wechselwirkung mit einer lokalen Umgebung erfolgen, vorzugsweise mit einer Oberfläche oder mit einem vorgebbaren Zustand einer vorgebbaren Struktur in der Probe.

Hinsichtlich der oben genannten Möglichkeiten der Beeinflussung sei darauf hingewiesen, dass es sich hierbei nicht um eine abschließende Aufzählung handelt. Es können durchaus auch weitere Beeinflussungsmöglichkeiten für die Verweildauer oder Wechselgeschwindigkeit realisiert werden. In jedem Fall ist hinsichtlich der Beeinflussungsmöglichkeiten auf den jeweiligen Anwendungsfall abzustellen. Grundsätzlich könnte die Wechselgeschwindigkeit zwischen oder die Verweildauer in den Zuständen auch von der Dichte der Substanz in der Probe abhängen. Je nach Anwendungsfall ist eine höhere oder niedrigere Dichte der Substanz in der Probe zu wählen. Letztendlich könnten je nach Dichte der Substanz in der Probe unterschiedliche Wechselgeschwindigkeiten zwischen den Zuständen von Vorteil sein, so dass eine geeignete Beeinflussung der Wechselgeschwindigkeit sinnvoll ist.

Bei einer konkreten Ausführung könnte die Substanz aus mindestens zwei Bestandteilen aufgebaut sein und könnten die Bestandteile in einem Zustand miteinander wechselwirken und einem anderen Zustand nicht. Die beiden Zustände könnten dabei in einem dynamischen Gleichgewicht vorliegen. Auch hier könnte eine wie oben beschriebene Beeinflussung der Verweildauer der Bestandteile in dem Zustand mit Wechselwirkung und in dem Zustand ohne Wechselwirkung möglich sein. Auch könnte die Wechselgeschwindigkeit zwischen den Zuständen durch eine wie oben beschriebene Veränderung mindestens eines äußeren Parameters beeinflussbar sein. Auch in diesem Fall mit einer Substanz aus mindestens zwei Bestandteilen könnte sich eine fotophysikalische Eigenschaft in dem Zustand mit möglicher Wechselwirkung von der fotophysikalischen Eigenschaft im anderen Zustand unterscheiden.

In weiter konkreter Weise könnte ein gewünschtes Signal von der Substanz nur in dem Fall ohne Wechselwirkung der Bestandteile erhalten werden. Alternativ hierzu - je nach Anwendungsfall - könnte ein gewünschtes Signal von der Substanz nur bei Wechselwirkung der Bestandteile erhalten werden.

Ein Beispiel, bei dem ein Signal nur dann erhalten wird, wenn die Bestandteile nicht miteinander wechselwirken, könnte ein sogenanntes "Quenching" - reversible Fluoreszenzlöschung durch einen Quencher - sein. Ein Beispiel, bei dem ein entsprechendes Signal nur dann erhalten wird, wenn die beiden Bestandteile miteinander wechselwirken, könnte in dem Fall vorliegen, in dem die Bestandteile der Donor und der Akzeptor eines FRET-Paares ("Fluorescence Resonance Energy Transfer") sind, wobei das gewünschte Signal die Fluoreszenz des Akzeptors ist.

Die Bestandteile könnten über einen Linker verbunden sein, wobei die Verweildauer der Bestandteile in einem der Zustände oder die Wechselgeschwindigkeit zwischen den Zuständen durch die Bindung einer Komponente an den Linker, durch eine lonenkonzentration in einer die Struktur enthaltenden Lösung oder durch den pH-Wert beeinflussbar sein könnte. Auf das Gleichgewicht zwischen den beiden Zuständen könnte des Weiteren durch die Temperatur Einfluss genommen werden. Eine Verschiebung des Gleichgewichts könnte je nach Anwendungsfall in geeigneter Weise erfolgen, so dass entweder der eine oder der andere Zustand in größerem Umfang und mit größerer Wahrscheinlichkeit vorliegt.

Beispielsweise kann für Chameleon, ein Ca2+-Sensor, der aus einem über einen Linker verbundenen FRET-Paar von zwei fluoreszierenden Proteinen besteht, über die Ca2+-Konzentration Einfluss auf die Konformation und damit auf die FRET-Effizienz und die Intensität des Signals des Akzeptors genommen werden.

Bei einer weiteren konkreten Ausführungsform könnte die Substanz oder ein Substanzkomplex in zwei Konformationen oder Quarterstrukturen vorliegen, die sich in einem dynamischen Gleichgewicht befinden und beispielsweise nur in einem dieser Zustände fluoreszieren. Als Substanz oder Substanzkomplex könnte beispielsweise ein Protein oder ein Proteinkomplex verwendet werden. Auf das Gleichgewicht bzw. auf die Verweildauer oder die Wechselgeschwindigkeit könnte in der oben beschriebenen Weise Einfluss genommen werden.

Im Hinblick auf ein besonders effizientes Untersuchungsverfahren könnten mehrere mit verschiedenen Substanzen markierte Strukturen einer Probe simultan oder sequenziell mit demselben Detektor oder mit unterschiedlichen Detektoren untersucht und aufgrund unterschiedlicher Eigenschaften eines jeweils detektierten Signals unterschieden werden, um ein hochaufgelöstes Bild mehrerer Strukturen zu erhalten. Die unterschiedlichen Eigenschaften könnten beispielsweise unterschiedliche Emissions- und Anregungsspektren umfassen.

Zur effizienten und individuellen Beleuchtung der Probe könnte eine SPIM- (Selective Plane Illumination Microscopy), TIRF- (Total Internal Reflection Fluorescence) oder Widefield-Beleuchtung verwendet werden. Neben der Detektion mit einer Kamera könnte auch die Detektion mit mehreren Kameras von Vorteil sein, mit denen man in der Hochauflösung zusätzlich 3D-Informationen erhalten kann. Hinsichtlich der Auswertung der erhaltenen Daten können übliche Auswerteverfahren verwendet werden, insbesondere diejenigen, die über Form und Größe der detektierten Signale 3D-Darstellungen ermöglichen.

In weiter vorteilhafter Weise könnte das erfindungsgemäße Verfahren bei einem dem sptPALM-Verfahren (single particle tracking PALM) analogen Verfahren eingesetzt werden. Dabei könnten an Stelle der Erzeugung eines hochaufgelösten Bildes aus der Serie der Schwerpunktsbilder Bewegungen der jeweiligen Einzelmoleküle zwischen den Bildern ausgewertet werden. Analog zum sptPALM ist der Vorteil gegenüber herkömmlichen single particle tracking-Verfahren, dass immer wieder andere Moleküle ausgelesen werden können, die sich gerade in demjenigen Zustand befinden, in dem sie das detektierbare Signal emittieren. Damit kann beispielsweise von einer Zelle eine viel bessere Statistik erhalten werden als mit herkömmlichen single particle tracking-Verfahren. Der Vorteil beim erfindungsgemäßen Verfahren liegt darin, dass das aktive Schalten zwischen den Zuständen entfällt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche und andererseits oder sind gebunden auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer bei dem erfindungsgemäßen Verfahren verwendbaren Substanz, die aus zwei über einen Linker verbundenen Bestandteilen besteht, und
- Fig. 2: in einer schematischen Darstellung ein weiteres Ausführungsbeispiel einer geeigneten Substanz, die aus drei über Linker verbundenen Bestandteilen besteht.

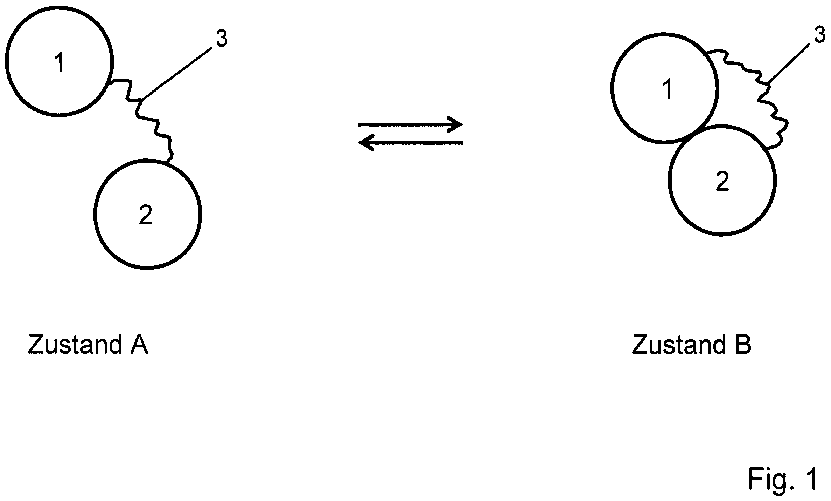

Fig. 1 zeigt in einer schematischen Darstellung eine bei einem Ausführungsbeispiel des erfindungsgemäßen Verfahrens verwendbare Substanz, die aus zwei Bestandteilen 1 und 2 besteht, die über einen flexiblen Linker 3 miteinander verbunden sind.

Die Substanz kann in zwei Zuständen A und B vorliegen, die sich im dynamischen Gleichgewicht befinden. In einem dieser Zustände können die Bestandteile 1 und 2 miteinander wechselwirken und im anderen nicht.

Dabei könnte ein Signal nur dann erhalten werden, wenn die Bestandteile nicht miteinander wechselwirken oder wenn sie miteinander wechselwirken.

Die Zustände A und B liegen in beeinflussbaren Wahrscheinlichkeiten vor, wobei ein spontaner Wechsel zwischen den beiden Zuständen in beiden Richtungen erfolgen kann.

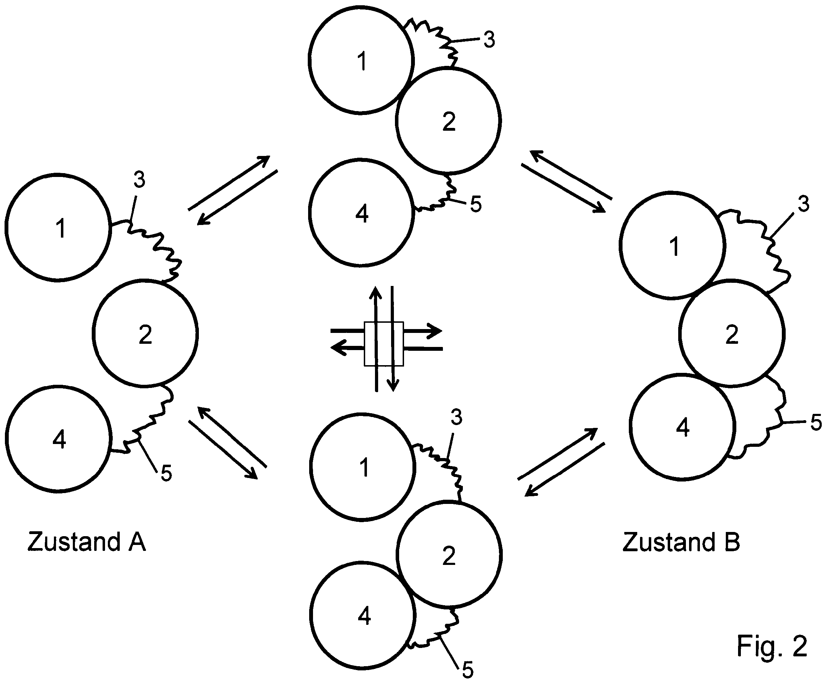

Fig. 2 zeigt in einer schematischen Darstellung eine weitere Substanz, die bei dem erfindungsgemäßen Verfahren zum Einsatz kommen kann. Dabei besteht die Substanz gemäß Fig. 2 aus drei Bestandteilen 1, 2 und 4, wobei die Bestandteile 1 und 2 über einen Linker 3 und die Bestandteile 2 und 4 über einen Linker 5 miteinander verbunden sind.

Zwischen den in Fig. 2 gezeigten Zuständen A und B sind Zwischenzustände dargestellt, die ebenfalls spontan entstehen können. Bei dem in Fig. 2 im oberen Teil gezeigten Zwischenzustand liegen die Bestandteile 1 und 2 aneinander oder sind gebunden und bei dem im unteren Teil der Fig. 2 gezeigten Zwischenzustand liegen die Bestandteile 2 und 4 aneinander oder sind gebunden. Im Zustand A liegen keine Bestandteile 1, 2 oder 4 aneinander und im Zustand B liegen sämtliche Bestandteile 1, 2 und 4 aneinander oder sind jeweils gebunden.

Auch hinsichtlich des in Fig. 2 gezeigten Ausführungsbeispiels einer Substanz sind Beeinflussungen der Verweildauer der Bestandteile 1, 2 und 4 in den Zuständen A und B oder der Wechselgeschwindigkeit zwischen den Zuständen A und B möglich.

Abschließend sei hervorgehoben, dass die beschriebenen Ausführungsbeispiele lediglich zur Erörterung der beanspruchten Lehre dienen, diese jedoch nicht auf die Ausführungsbeispiele einschränken.

### Bezugszeichenliste

- 1: Bestandteil
- 2: Bestandteil
- 3: Linker
- 4: Bestandteil
- 5: Linker
- A: Zustand
- B: Zustand

## Patentansprüche

1. Stochastisches Lokalisationsmikroskopieverfahren zur räumlich hochauflösenden stochastischen Untersuchung einer mit einer Substanz markierten Struktur einer Probe, wobei als Struktur, die mit der Substanz markiert wird, eine biologische Struktur verwendet wird, wobei Moleküle der Substanz in einem ersten Zustand (A) und in einem zweiten Zustand (B) vorliegen können, wobei sich der erste und der zweite Zustand (A, B) in mindestens einer fotophysikalischen Eigenschaft voneinander unterscheiden und wobei eine Substanz verwendet wird, bei der mit hinreichend hoher Wahrscheinlichkeit und in hinreichend großem Umfang ein Teil der Moleküle in dem ersten Zustand (A) und ein Teil der Moleküle in dem zweiten Zustand (B) vorliegen und ein Wechsel zwischen den beiden Zuständen (A, B) in beiden Richtungen spontan erfolgen kann, umfassend die folgenden Schritte:
- Markieren der Struktur mit der Substanz;
- Aufnehmen einer Bildserie der Probe;
- Bestimmen von Schwerpunkten von Einzelmolekülen in den aufgenommenen Bildern; und
- Konstruieren eines hochaufgelösten Bilds aus der Serie der Schwerpunktsbilder.

2. Verfahren nach Anspruch 1, **dadurch gekennzeichnet, dass** die Moleküle der Substanz in mindestens einem weiteren Zustand vorliegen können, wobei sich sämtliche Zustände in mindestens einer fotophysikalischen Eigenschaft voneinander unterscheiden, und dass mit hinreichend hoher Wahrscheinlichkeit und in hinreichend großem Umfang ein Teil der Moleküle in dem ersten Zustand (A), ein Teil der Moleküle in dem zweiten Zustand (B) und ein Teil der Moleküle in dem mindestens einen weiteren Zustand vorliegen und ein Wechsel zwischen sämtlichen Zuständen in allen Richtungen spontan erfolgen kann.

3. Verfahren nach Anspruch 1 oder 2, **dadurch gekennzeichnet, dass** es sich bei mindestens einem Zustand (A, B) um einen nicht fluoreszierenden Zustand (A, B) und bei mindestens einem anderen Zustand (B, A) um einen fluoreszierenden Zustand (B, A) handelt.

4. Verfahren nach einem der Ansprüche 1 bis 3, **dadurch gekennzeichnet, dass** die Verweildauer der Moleküle in einem Zustand (A, B) oder in mehreren Zuständen (A, B) einige Mikrosekunden beträgt.

5. Verfahren nach einem der Ansprüche 1 bis 4, **dadurch gekennzeichnet, dass** die Verweildauer der Moleküle in einem Zustand (A, B) oder in mehreren Zuständen (A, B) oder die Wechselgeschwindigkeit zwischen den Zuständen (A, B) durch die Veränderung mindestens eines äußeren Parameters beeinflussbar ist.

6. Verfahren nach Anspruch 5, **dadurch gekennzeichnet, dass** der mindestens eine äußere Parameter die Temperatur, ein elektrisches Feld oder Licht ist.

7. Verfahren nach Anspruch 5 oder 6, **dadurch gekennzeichnet, dass** die Beeinflussung durch eine Veränderung der Konzentration und/oder einer Eigenschaft mindestens einer Komponente in der Probe oder mindestens einer Komponente in einer die Struktur enthaltenden Lösung erfolgt.

8. Verfahren nach einem der Ansprüche 5 bis 7, **dadurch gekennzeichnet, dass** die Beeinflussung durch den Austausch eines Lösungsmittels oder durch die Veränderung einer Eigenschaft des Lösungsmittels in einer die Struktur enthaltenden Lösung erfolgt.

9. Verfahren nach einem der Ansprüche 1 bis 8, **dadurch gekennzeichnet, dass** die Wechselgeschwindigkeit zwischen oder die Verweildauer in den Zuständen (A, B) von der Dichte der Substanz in der Probe abhängt.

10. Verfahren nach einem der Ansprüche 1 bis 9, **dadurch gekennzeichnet, dass** die Substanz aus mindestens zwei Bestandteilen (1, 2, 4) aufgebaut ist und dass die Bestandteile (1, 2, 4) in einem Zustand (A, B) miteinander wechselwirken können und in einem anderen Zustand (B, A) nicht.

11. Verfahren nach Anspruch 10, **dadurch gekennzeichnet, dass** sich eine fotophysikalische Eigenschaft in dem Zustand (A, B) mit möglicher Wechselwirkung von der fotophysikalischen Eigenschaft im anderen Zustand (B, A) unterscheidet.

12. Verfahren nach Anspruch 11, **dadurch gekennzeichnet, dass** die Bestandteile (1, 2, 4) der Donor und der Akzeptor eines FRET-Paares sind und dass das gewünschte Signal die Fluoreszenz des Akzeptors ist.

13. Verfahren nach einem der Ansprüche 10 bis 12, **dadurch gekennzeichnet, dass** die Bestandteile (1, 2, 4) über einen Linker (3, 5) verbundenen sind und dass die Verweildauer der Bestandteile (1, 2, 4) in einem der Zustände (A, B) oder die Wechselgeschwindigkeit zwischen den Zuständen (A, B) durch die Bindung einer Komponente an den Linker (3, 5), durch eine lonenkonzentration in einer die Struktur enthaltenden Lösung oder durch den ph-Wert beeinflussbar ist.

14. Verfahren nach einem der Ansprüche 1 bis 13, **dadurch gekennzeichnet, dass** die Substanz oder ein Substanzkomplex, beispielsweise ein Protein oder ein Proteinkomplex, in zwei Konformationen oder Quarterstrukturen vorliegen kann, die sich in einem dynamischen Gleichgewicht befinden und beispielsweise nur in einem dieser Zustände (A, B) fluoreszieren.

15. Verfahren nach einem der Ansprüche 1 bis 14, **dadurch gekennzeichnet, dass** das Verfahren bei einem dem sptPALM-Verfahren (single particle tracking PALM) analogen Verfahren eingesetzt wird.

## Claims

1. Stochastic localization microscopy method for spatially highly resolving stochastic examination of a structure of a sample labelled with a substance, wherein a biological structure is used as the structure that is labelled with a substance, wherein molecules of the substance can be present in a first state (A) and in a second state (B), wherein the first and the second states (A, B) differ from one another in at least one photophysical property and wherein a substance is used in which, with sufficiently high probability and to a sufficiently large extent, a part of the molecules is present in the first state (A) and a part of the molecules is present in the second state (B) and a change between the two states (A, B) can spontaneously occur in both directions, comprising the following steps:
- labelling the structure with the substance;
- recording an image series of the sample;
- determining centres of mass of individual molecules in the recorded images; and
- constructing a high-resolution image from the series of the centre-of-mass images.

2. Method according to Claim 1, **characterized in that** the molecules of the substance can be present in at least one further state, wherein all states differ from one another in at least one photophysical property, and **in that**, with sufficiently high probability and to a sufficiently large extent, a part of the molecules is present in the first state (A), a part of the molecules is present in the second state (B), and a part of the molecules is present in the at least one further state, and a change between all states can occur spontaneously in all directions.

3. Method according to Claim 1 or 2, **characterized in that** at least one state (A, B) is a non-fluorescent state (A, B), and at least one other state (B, A) is a fluorescent state (B, A).

4. Method according to one of Claims 1 to 3, **characterized in that** the residence time of the molecules in a state (A, B) or in a plurality of states (A, B) is a few microseconds.

5. Method according to one of Claims 1 to 4, **characterized in that** the residence time of the molecules in a state (A, B) or in a plurality of states (A, B) or the speed of change between the states (A, B) is influenceable by the change in at least one external parameter.

6. Method according to Claim 5, **characterized in that** the at least one external parameter is the temperature, an electric field, or light.

7. Method according to Claim 5 or 6, **characterized in that** the influencing is accomplished by changing the concentration and/or a property of at least one component in the sample or of at least one component in a solution containing the structure.

8. Method according to one of Claims 5 to 7, **characterized in that** the influencing is accomplished by exchanging a solvent or by changing a property of the solvent in a solution containing the structure.

9. Method according to one of Claims 1 to 8, **characterized in that** the speed of change between or the residence time in the states (A, B) is a function of the density of the substance in the sample.

10. Method according to one of Claims 1 to 9, **characterized in that** the substance is made up of at least two constituent parts (1, 2, 4) and **in that** the constituent parts (1, 2, 4) can interact with one another in one state (A, B) and cannot interact with one another in another state (B, A).

11. Method according to Claim 10, **characterized in that** a photophysical property in the state (A, B) with possible interaction differs from the photophysical property in the other state (B, A).

12. Method according to Claim 11, **characterized in that** the constituent parts (1, 2, 4) are the donor and the acceptor of a FRET pair and **in that** the desired signal is the fluorescence of the acceptor.

13. Method according to one of Claims 10 to 12, **characterized in that** the constituent parts (1, 2, 4) are connected via a linker (3, 5) and **in that** the residence time of the constituent parts (1, 2, 4) in one of the states (A, B) or the speed of change between the states (A, B) is influenceable by way of binding a component to the linker (3, 5), by way of an ion concentration in a solution containing the structure, or by way of the pH value.

14. Method according to one of Claims 1 to 13, **characterized in that** the substance or a substance complex, for example a protein or protein complex, can be present in two conformations or quaternary structures which are in a dynamic equilibrium and fluoresce for example only in one of said states (A, B).

15. Method according to one of Claims 1 to 14, **characterized in that** the method is used in a method that is analogous to the sptPALM method (single particle tracking PALM).

## Revendications

1. Procédé de localisation stochastique par microscopie pour l'examen stochastique à haute résolution spatiale d'une structure, marquée par une substance, d'un échantillon, dans lequel une structure biologique est utilisée en tant que structure marquée par la substance, dans lequel des molécules de la substance peuvent être présentes dans un premier état (A) et dans un deuxième état (B), dans lequel les premier et deuxième états (A, B) diffèrent l'un de l'autre par au moins une propriété photophysique et dans lequel on utilise une substance pour laquelle, avec une probabilité suffisamment élevée et dans une mesure suffisamment grande, une partie des molécules est présente dans le premier état (A) et une partie des molécules est présente dans le deuxième état (B) et un changement entre les deux états (A,B) peut se produire spontanément dans les deux directions, comprenant les étapes suivantes consistant à :
- marquer la structure avec la substance ;
- capturer une série d'images de l'échantillon ;
- déterminer des centres de gravité de molécules individuelles dans les images capturées ; et
- construire une image à haute résolution à partir de la série d'images de centres de gravité.

2. Procédé selon la revendication 1, **caractérisé en ce que** les molécules de la substance peuvent être présentes dans au moins un état supplémentaire, dans lequel tous les états diffèrent les uns des autres par au moins une propriété photophysique, et **en ce que**, avec une probabilité suffisamment élevée et dans une mesure suffisante, une partie des molécules est présente dans le premier état (A), une partie des molécules est présente dans le deuxième état (B) et une partie des molécules est présente dans ledit au moins un état supplémentaire et un changement entre tous les états dans toutes les directions peut se produire spontanément.

3. Procédé selon la revendication 1 ou 2, **caractérisé en ce qu'**au moins un état (A, B) est un état non fluorescent (A, B) et au moins un autre état (B, A) est un état fluorescent (B, A).

4. Procédé selon l'une des revendications 1 à 3, **caractérisé en ce que** le temps de séjour des molécules dans un état (A, B) ou dans plusieurs états (A, B) est de quelques microsecondes.

5. Procédé selon l'une des revendications 1 à 4, **caractérisé en ce qu'**il est possible de produire une influence sur le temps de séjour des molécules dans un état (A, B) ou dans plusieurs états (A, B) ou sur la vitesse de changement entre les états (A, B) en modifiant au moins un paramètre externe.

6. Procédé selon la revendication 5, **caractérisé en ce que** ledit au moins un paramètre externe est la température, un champ électrique ou de la lumière.

7. Procédé selon la revendication 5 ou 6, **caractérisé en ce que** l'influence est produite par une modification de la concentration et/ou d'une propriété d'au moins un constituant dans l'échantillon ou d'au moins un constituant dans une solution qui contient la structure.

8. Procédé selon l'une quelconque des revendications 5 à 7, **caractérisé en ce que** l'influence est produite par échange d'un solvant ou par modification d'une propriété du solvant dans une solution contenant la structure.

9. Procédé selon l'une quelconque des revendications 1 à 8, **caractérisé en ce que** la vitesse de variation entre les états (A, B) ou le temps de séjour dans lesdits états dépend de la densité de la substance dans l'échantillon.

10. Procédé selon l'une quelconque des revendications 1 à 9, **caractérisé en ce que** la substance est composée d'au moins deux constituants (1, 2, 4) et **en ce que** les constituants (1, 2, 4) peuvent interagir entre eux dans un état (A, B) et non dans un autre état (B, A).

11. Procédé selon la revendication 10, **caractérisé en ce qu'**une propriété photophysique dans l'état (A, B) avec interaction possible diffère de la propriété photophysique dans l'autre état (B, A).

12. Procédé selon la revendication 11, **caractérisé en ce que** les constituants (1, 2, 4) sont le donneur et l'accepteur d'une paire FRET et **en ce que** le signal souhaité est la fluorescence de l'accepteur.

13. Procédé selon l'une quelconque des revendications 10 à 12, **caractérisé en ce que** les constituants (1, 2, 4) sont liés par un élément de liaison (3, 5) et **en ce que** le temps de séjour des constituants (1, 2, 4) dans l'un des états (A, B) ou la vitesse de changement entre les états (A, B) peut être influencée par la liaison d'un constituant à l'élément de liaison (3, 5), par une concentration ionique dans une solution contenant la structure ou par la valeur du pH.

14. Procédé selon l'une quelconque des revendications 1 à 13, **caractérisé en ce que** la substance ou un complexe de substances, par exemple une protéine ou un complexe de protéines, peut être présent en deux conformations ou quarts de structures qui sont en équilibre dynamique et ne sont fluorescentes, par exemple, que dans l'un desdits états (A, B).

15. Procédé selon l'une quelconque des revendications 1 à 14, **caractérisé en ce que** le procédé est mis en oeuvre dans le cas d'un procédé analogue au procédé sptPALM (single particle tracking PALM).
